# EUROPÄISCHE PATENTSCHRIFT

(11) **EP 3 326 735 B1**
(45) Veröffentlichungstag und Bekanntmachung des Hinweises auf die Patenterteilung: **22.07.2020**
(21) Anmeldenummer: 17174075.6
(22) Anmeldetag: 01.06.2017
(51) Int. Cl.: G01F 1/58, G01F 1/74, B22D 41/08, B22D 41/22, B22D 41/36, B22D 41/60, B22D 2/00, B22D 11/16, B22D 41/24, B22D 41/46, C21C 5/46, F27D 3/15, F27D 19/00, F27D 21/04, C21C 5/52, G01F 23/26

(54) **VERFAHREN SOWIE EINE EINRICHTUNG ZUM DETEKTIEREN VON GRÖSSEN IM AUSGUSS EINES METALLURGISCHEN GEFÄSSES**
METHOD AND DEVICE FOR THE DETECTION OF QUANTITIES IN THE OUTLET OF A METALLURGICAL VESSEL
PROCÉDÉ ET DISPOSITIF DE DÉTECTION DE DIMENSIONS DANS LE BEC VERSEUR D'UN RÉCIPIENT MÉTALLURGIQUE

(43) Veröffentlichungstag der Anmeldung: 30.05.2018
(73) Patentinhaber: Refractory Intellectual Property GmbH & Co. KG, 1100 Wien (AT)
(72) Erfinder: Manhart, Christian, AT-8600 Bruck a.d. Mur (AT); Vukovic, Goran, AT-1210 Wien (AT); Gamweger, Klaus, AT-8793 Trofaiach (AT)
(74) Vertreter: Luchs, Willi

(56) Entgegenhaltungen:
- EP-A1- 2 366 474
- WO-A1-98/07536
- DE-A1- 19 651 534
- FR-A1- 2 532 208
- JP-A- S5 930 468
- US-A- 4 810 988
- US-A- 4 816 758

## Beschreibung

Die Erfindung betrifft ein Verfahren zum Detektieren von Grössen im Ausguss eines metallurgischen Gefässes nach dem Oberbegriff des Anspruchs 1 bzw. durch eine Einrichtung nach Anspruch 5.

Gemäss der Druckschrift EP-A-0 306 792 ist eine Einrichtung zur Schlackenfrüherkennung eines Schmelzenstroms aus einer Metallschmelze enthaltenden Pfanne offenbart, bei welcher eine Spule vorgesehen ist, welche unterhalb des Pfannenausgusses ein Giessrohr umschliesst. Diese Detektorspule generiert einen Strom, mittels welchem Änderungen der elektrischen Leifähigkeit der abfliessenden Metallschmelze durch Schlackeneinschluss als korrespondierende Änderung in der ausgehenden Impedanz dieser Detektorspule reflektiert und von Auswertemitteln gemessen wird. Es ist dazu ein Kreislauf mit einer Signalverstärkung vorgesehen, welcher diese Detektorspule und einen einstellbaren Kondensator zur Einstellung der Resonanzfrequenz umfasst, so dass die kapazitive Reaktion des Kreislaufs aufgrund der Präsenz dieses Kondensators die induktive Reaktion des Kreislaufs löscht, so dass nur eine Impedanz in Abhängigkeit zu dem Widerstand der Spule verbleibt.

In der Druckschrift EP-A-2 366 474 ist eine Vorrichtung zur Erfassung des Schlackengehalts der durchfliessenden Stahlschmelze offenbart, bei der ein Sensor im Ausguss, ein Signalkabel und ein Signalprozessor vorgesehen ist. Der Sensor ist in einem Metallgehäuse eingekapselt und weist eine Empfangsspule, eine Sendespule und eine Kompensationsspule auf. Beim Abgiessen wird durch den Signalprozessor bei einem Übersteigen des Schlackengehaltes in der Metallschmelze von einem vorgegebenen Wert ein Alarm erzeugt und ein Schiebeverschluss am Ausguss des Tundish wird geschlossen. Es wird dabei von dem Signalprozessor ein Wechselstrom in der Sendespule erzeugt, um in der Metallschmelze ein Wirbelstrom zu induzieren. Diese induzierten Wirbelströme werden dann von der Empfangsspule bzw. der Kompensationsspule gemessen und an den Signalprozessor zum Auswerten weitergeleitet.

Ein Verfahren zum Detektieren von Schlacke in der abfliessenden Metallschmelze ist in der Druckschrift US-4,816,758 offenbart, bei dem eine Sende- und eine Empfangsspule den Auslass umschliessen. Die Sendespule wird mit einem mehrere Frequenzen enthaltenden Strom beaufschlagt, der in der Empfangsspule eine Spannung induziert, die frequenzselektiv ausgewertet wird und aus deren spektralem komplexem Verlauf die Leitfähigkeitsverteilung im Auslass und daraus der Anteil der Schlacke in der abfliessenden Metallschmelze sowie der durch den Verschleiss sich ändernde Durchmesser der Auslassöffnung ermittelt wird. Zudem wird eine kontinuierliche oder quasikontinuierliche Messung der sich ändernden Temperatur der Schmelze und der Messaufnehmer durchgeführt und es erfolgt eine Verknüpfung der Temperaturdaten mit den Messwerten des induzierten Spannungsspektrums.

Bei einem Verfahren zum Entfernen von Clogging gemäss den Druckschiften JP-A-59030468 und WO98/07536 wird induktiv mittels einer Induktionsspule, welche in der Pfanne oder im Gießkanal angeordnet ist und eine den Auslaufkanal bildende feuerfeste Hülse umgibt. Durch das induktive Aufheizen der abfliessenden Schmelze kann Clogging in der Hülse ohne Rückstände entfernt werden.

Bei einem weiteren Verfahren zum An- und Vergiessen von flüssigen Metallen gemäss der Druckschrift DE-A-196 51 534 ist in dem Ausguss mit einer Ausgusshülse im Gefäss mindestens ein fluidgekühlter Induktor elektromagnetisch angekoppelt. Damit wird die Ausgusshülse und folglich die abfliessende Schmelze mit unterschiedlichen Leistungen aufgeheizt.

Der Erfindung liegt die Aufgabe zugrunde, ein Verfahren zum Detektieren von Grössen im Ausguss eines metallurgischen Gefässes derart zu verbessern, dass mit ihm ein optimaler Betrieb beim Abgiessen von Metallschmelze ermöglicht wird und dass ferner die volle Funktionsfähigkeit des Gefässes während des gesamten Abgiessvorgangs gewährleistet ist. Diese Aufgabe ist erfindungsgemäss nach den Merkmalen des Anspruchs 1 bzw. des Anspruchs 5 gelöst.

Mit diesem erfindungsgemässen Verfahren wird mittels einer Induktionsspule einer Induktionsheizung als Monitoring die verschiedenen Grössen im Ausguss detektiert bzw. gemessen, wobei es sich bei den Grössen vorzugsweise um den Schlackenanteil beim Abgiessen der Metallschmelze, um den Verschleisszustand der Feuerfestteile im Ausgusskanal, die erstarrte Metallschmelze, die Durchflussmenge und/oder Stopfmasse im Ausgusskanal handelt. Folglich kann nach dem Auswerten ein Verschlussorgan für den Ausguss betätigt, ein Aufheizen des Metalls im Ausgusskanal und/oder eine Erneuerung des Ausgusskanals ausgelöst werden.

Damit kann auf einfache Weise ein optimaler Betrieb beim Abgiessen der Metallschmelze aus einem Gefäss erzielt werden, bei dem während der gesamten Abgiessdauer erkannt wird, wenn Unregelmässigkeiten auftreten und darüberhinaus am Ende das Abgiessen von Schlacke erfolgreich verhindert werden kann.

Des weiteren kann vor oder nach dem Abgiessen oder wenn die Schmelze im Ausguss eingefroren ist, ebenfalls sehr einfach festgestellt werden, wie weit gefrorene Schmelze oder Stopfmasse darin enthalten ist.

Ebenso kann detektiert und bestimmt werden, wie weit die den Ausguss bildenden Feuerfestteile verschliessen sind und zu welchem Zeitpunkt dieselben ausgewechselt werden sollten.

Zusätzlich ist es auf diese Weise möglich, die im Ausgangskanal des Ausgusses befindliche Schmelze stets so warm zu halten, dass sie vor und/oder während dem Abgiessen der Schmelze nicht einfriert bzw. dass das allenfalls eingefrorene Metall und/oder Schlacke im Ausguss aufgeschmolzen werden kann.

Dementsprechend kann bereits vor dem Abgiessen bei geschlossenem Schiebeverschluss die im Ausgangskanal gefrorene Schmelze und/oder Schlacke mit der Induktionsspule aufgeschmolzen werden. Dadurch wird der gesamte Giessvorgang sicherer durchgeführt und dabei besser steuer- bzw. kontrollierbar sein und zudem wird eine längere Haltbarkeit der Feuerfest-Materialien des Ausgusses erreicht. Somit kann auf ein Verwenden von Stopfmasse und ihrer Ausbohrung bzw. auf ein Aufschmelzen von eingefrorener Schmelze oder Schlacke mit einer herkömmlichen Lanze verzichtet werden.

Die Erfindung sieht auch vor, dass sich die Induktionsheizung aus einer den Ausguss umgebenden Induktionsspule und einem diese umfassenden Kühlsystem zusammensetzt. Mit dieser Massnahme wird verhindert, dass die Induktionsspule bzw. ihr ferritischer Tragkörper durch die Ausmauerung bzw. der Aussenmantel des Ofens und der im Betrieb heisslaufende Schiebeverschluss aufgeheizt wird.

Um die Heizleistung der Induktionsspule möglichst verlustarm auf den Abgusskanal zu konzentrieren, sieht die Erfindung vor, dass die Induktionsspule in einem Tragkörper aus ferritischem Material eingebettet ist und das Kühlsystem mit einer den Tragkörper peripherisch umschliessenden Kühlkammer sowie einer an der zum Ofen hin gerichteten Seitenwand des Tragkörpers angrenzenden Kühlkammer versehen ist.

Mit dem Kühlsystem der Induktionsspule ergibt sich ein weiterer Vorteil, dass auch eine gezielte Erstarrung der Schmelze oder Schlacke im Ausguss eines Ofens bei geschlossenem Schiebeverschluss bzw. bei geschlossenem Abstich ermöglicht wird. Dies kann mit der Spule entsprechend detektiert und angezeigt werden. Dies kann beispielsweise als Durchbruchsicherung dienen, um zwischen zwei Giessvorgängen einen sicheren Betrieb eines Ofens zu gewährleisten, was bei gewissen metallurgischen Öfen wichtig sein könnte, beispielsweise wenn sein Ausguss während des Betriebs unterhalb des Badniveaus liegt.

Die Innenhülse ist im Bereich des Graphiteinsatzes mit einer die Innenfläche des Einsatzes schützenden Hartschicht versehen, beispielsweise aus Tonerdematerial oder SiC. Dadurch wird verhindert, dass die abfliessende Schmelze und/oder die Schlacke und/oder oxidierendes Gas, wie zum Beispiel Luft, den Graphiteinsatz angreifen kann. Dieser Schutzeffekt kann auch auf die gesamte Innenhülse ausgedehnt werden, indem die Hartschicht über den Einsatz hinaus verlängert wird.

Die Erfindung wird nachfolgend anhand eines Ausführungsbeispiels unter Bezugnahme auf die Zeichnung näher erläutert. Es zeigen:
- Fig. 1: einen teilweisen Querschnitt bzw. eine Teilansicht eines Ausgusses eines Kupfer-Anodenofens mit einem Schiebeverschluss als Verschlussorgan zur Durchführung des erfindungsgemässen Verfahrens;
- Fig.2: ein Diagramm mit einem normierten Verlauf des Stroms, des komplexen Widerstands, des komplexen Winkels der Impedanz in einer Spule in Abhängigkeit des Mischverhältnisses der Metallschmelze zur Schlacke gemäss der Abszisse;
- Fig. 3: einen erfindungsgemässen Kupfer-Anodenofen mit einer Einrichtung, perspektivisch dargestellt; und
- Fig. 4: einen vergrösserten schematischen Querschnitt durch eine Induktionsheizung im Ausguss nach Fig. 1.

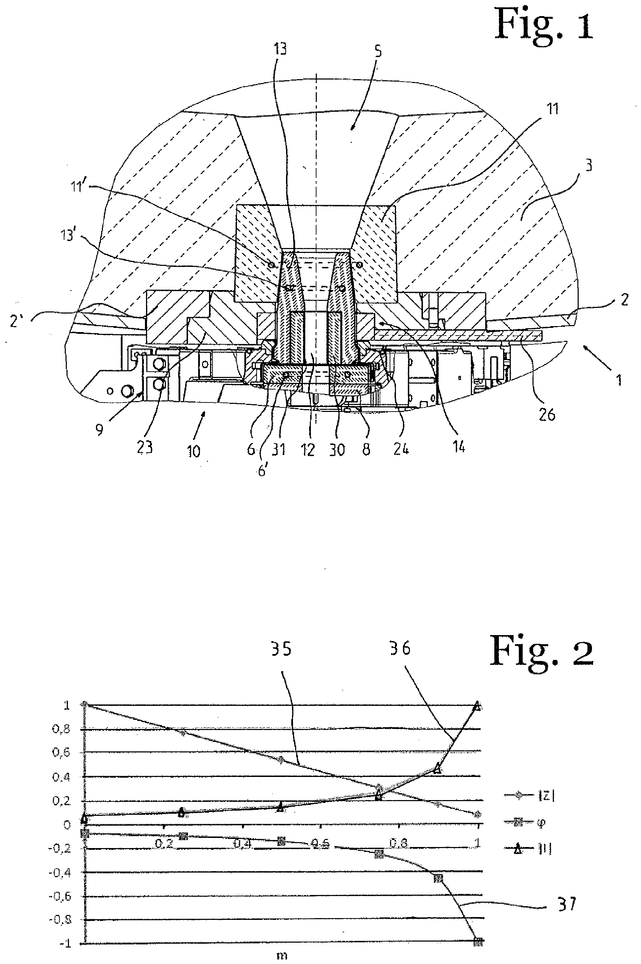

Fig. 1 zeigt den Ausguss 5 eines metallurgischen Ofens, vorzugsweise eines Kupfer-Anodenofens 1, welcher einen äusseren Stahlmantel 2 und eine feuerfeste Auskleidung 3 umfasst. In der Auskleidung 3 ist dieser Ausguss 5 radial nach aussen verlaufend mit einem Lochstein 11 mit dem Ausgusskanal 12 gebildet.

Ein an sich herkömmlicher Schiebeverschluss 10 als Verschlussorgan des Ausgusskanals 12 ist am Ausguss 5 angeordnet. Es ist bei diesem ein an der Aussenseite des Ofens befestigtes Gehäuse 9 vorgesehen, in welchem wenigstens eine feuerfeste Verschlussplatte 6 eingelegt sowie eine oberhalb dieser anschliessenden Innenhülse 13 lösbar befestigt ist. Dieser Schiebeverschluss 10 weist zudem eine angedeutete bewegliche feuerfeste Schieberplatte 8 auf, die in einer nicht näher gezeigten Einheit gehalten ist und gegen die obere Verschlussplatte 6 angepresst ist und relativ zu dieser in eine Offen- bzw. Schliessposition des Schiebeverschlusses bewegbar ist.

Beim Ausguss 5 ist eine wegnehmbare Induktionsheizung 14 platziert, die oberhalb des Gehäuses 9 eine die Innenhülse 13 umgebende Induktionsspule 15 aufweist. Zweckmässigerweise ist dem Gehäuse 9 dabei ein Tragring 23 zugeordnet, welcher in einer im Stahlmantel 2 des Ofens 1 befestigten Halteplatte 2' fixiert ist.

Bei dem Verfahren zum Detektieren von Grössen in dem Ausguss 5 des Kupfer-Anodenofens 1 ist vorgesehen, dass mittels wenigstens einer den Ausgusskanal 12 umgebenden Spule und einer mit dieser durch Leitungen verbundenen Versorgungs- bzw. Auswerteeinheit gemessen und ausgewertet wird. Es wird dabei durch die Versorgungseinheit in der jeweiligen Spule ein Wechselstrom mit einer vorgegebenen Frequenz erzeugt und durch diese Auswerteeinheit werden die Impedanz und/oder der induzierte Stromverlauf durch Änderungen der Grössen im Ausguss 5 ermittelt.

Erfindungsgemäss wird diese wenigstens eine Spule, die in einem den Ausgusskanal 12 bildenden Feuerfestteil, wie in dem Lochstein 11, in der einen Innenhülse 13, in einer Einsatzhülse 30, in einer Verschlussplatte 6 des Schiebeverschlusses 10 aufgenommen ist, und/oder diese als den Ausgusskanal umgebende Induktionsspule 15 einer Induktionsheizung 14 verwendet, mittels welcher als Monitoring jeweils die mindestens eine, vorzugsweise verschiedenen Grössen im Ausguss detektiert bzw. gemessen werden, wie der Schlackenanteil beim Abgiessen der Metallschmelze, der Verschleisszustand des Ausgusskanals, erstarrte Metallschmelze und/oder Stopfmasse im Ausgusskanal. Ferner kann mit diesem Monitoring auch die Durchflussmenge bestimmt und ausserdem Gaseinschlüsse insbesondere als Gasbläschen in der abfliessenden Schmelze eruiert werden.

Nach dem Auswerten kann je nachdem der Schiebeverschluss 10 betätigt, ein Aufheizen des Metalls im Ausgusskanal 12 und/oder eine Erneuerung dieses Ausgusskanals 12 erfolgen.

In Fig. 1 sind nebst der Induktionsspule 15 beispielhaft eine Spule 11' in dem Lochstein 11, eine Spule 13' in der Innenhülse 13, und eine Spule 6' in der Verschlussplatte 6 als mögliche Positionierung für dieses Monitoring angedeutet. Es versteht sich von selbst, dass mit dem erfindungsgemässen Verfahren jeweils nur die Induktionsspule 15, oder vorzugsweise zusätzlich nur eine der angedeuteten Spulen 6', 11', 13' für das Detektieren der verschiedenen Grössen im Ausguss 5 verwendet und damit ausreichende Resultate erzielt werden können. Die Induktionsspule 15 kann aber auch nur für das Aufheizen verwendet werden.

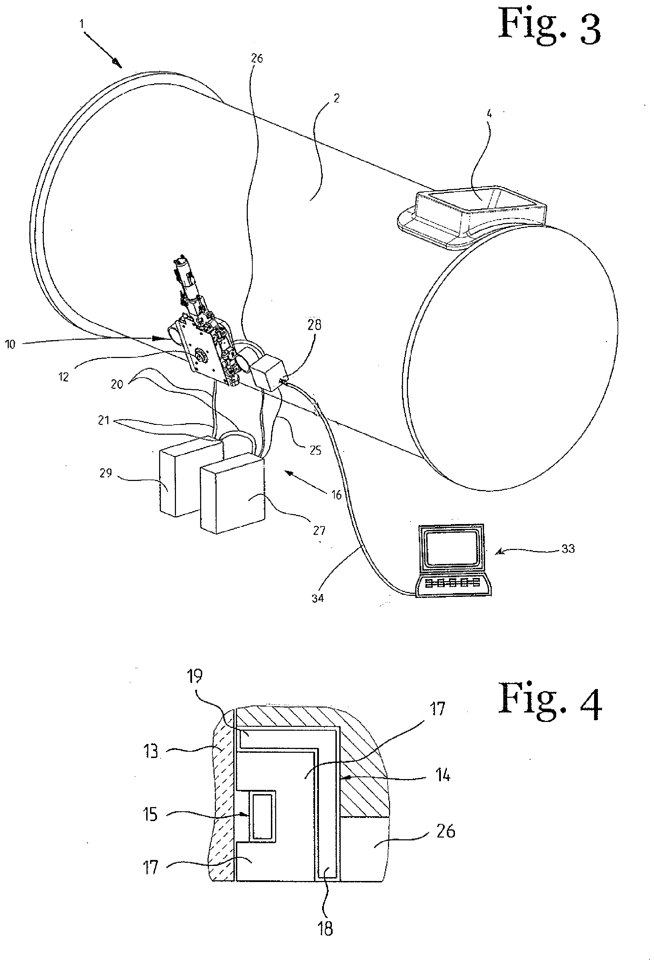

Diese jeweilige Spule 6', 11', 13' ist durch eine Leitung 34 wie diejenige für die Induktionsspule 15 geführte Leitung 26 mit einer externen Versorgungs- bzw. Auswerteeinheit 33 verbunden, wie dies in Fig. 3 ersichtlich ist.

Diese elektrisch leitenden Spulen 6', 11', 13' umgeben jeweils die Durchlassöffnung des Feuerfestteils 6, 11, 13 vorteilhaft koaxial und sind aus einer oder vorzugsweise mehreren Windungen gefertigt. Sie sind mit einer nach ausserhalb des Feuerfestteils geführten Leitung versehen. Sie sind dabei mit einer solchen Anzahl von Windungen ausgebildet, dass mit diesen ausreichende Messzustände erzielt werden können.

Ausgehend von der von der Versorgungseinheit in der Spule erzeugten Spannung, Strom und Frequenz werden durch die Auswerteeinheit der komplexe Widerstand (Z), der komplexe Winkel (ϕ) und/oder der Strom (I) der Impedanz bestimmt.

Die Messzustände der Impedanz und/oder des induzierten Stromverlaufs werden vor, während und/oder nach dem Abgiessen in den verschiedenen Zuständen des Anteils der Schlacke in der Schmelze bzw. des Verschleisses im Ausguss 5 ermittelt und als kalibrierende Sollwerte gespeichert, welche mit den gemessenen Istwerten vor, während und/oder nach dem Abgiessen verglichen und daraus die Grössen zugeordnet werden.

Es können auch die Messzustände der Impedanz vor, während und/oder nach dem Abgiessen im Neuzustand des Ausgusses und beim Abgiessen nur des Metalls bzw. nur der Schlacke in diesem Neuzustand des Ausgusses ermittelt und die Istwerte mit diesem Ausgangszustand verglichen und ausgewertet werden.

Fig. 2 zeigt ein Diagramm mit einem normierten, nicht in absoluten Zahlen veranschaulichten Verlauf des Stroms [I], des komplexen Widerstands [Z] und des komplexen Winkels [ϕ] der Impedanz in einer Spule in Abhängigkeit des Mischverhältnisses m der Metallschmelze zur Schlacke. Das Mischverhältnis m ist auf der Abszisse zwischen dem Wert 0 und 1 des Anteils von Metall (Kupfer) von 0 bis 100% angegeben, indes die in der Ordinate normierten bzw. Verhältnis-Werte zwischen -1 und +1 liegen.

Es ist ersichtlich, dass der komplexe Widerstand [Z] gemäss der Kurve 35 aus dem Wechselstrom in der Spule bei 50 Hz mit der Abnahme des Metallanteils annähernd proportional zunimmt. Die Kurven 36 und 37 mit dem Strom [I] und dem komplexen Winkel [ϕ] verlaufen annähernd symmetrisch zu der Null-Linie und diese ändern sich mit der Abnahme des Metallanteils zuerst stark und bei etwas über 80% Metallanteil geht der Verlauf in eine verhältnismässig geringere gegen Null gerichtete annähernd proportionale Abnahme über. Es ist damit bestätigt, dass mittels der Impedanz der Schlackenanteil in der abfliessenden Metallschmelze genau ermittelt werden kann.

Für das Monitoring der mindestens einen, vorzugsweise verschiedenen Grössen wird im Rahmen der Erfindung zusätzlich eine Temperaturmessung im Bereich des Ausgusskanals 12 und/oder bei der Induktionsheizung 14 vorgenommen. Zweckmässigerweise wird wenigstens ein Sensor in dem genannten Bereich eingebaut, welcher via eine Leitung mit der Auswerteeinheit verbunden wird und zur Bestimmung der Grössen beigezogen bzw. mit Sollwerten verglichen und bei entsprechenden Abweichungen das Verschlussorgan für den Ausguss betätigt, eine Aufheizung des Metalls im Ausgusskanal und/oder eine Erneuerung des Ausgusskanals ausgelöst werden kann. Diese Berücksichtigung der Temperatur im Ausguss 5 kann auch mit der Ermittlung der Impedanz koordiniert bzw. verglichen werden, damit man Fehler bei den Messungen ausgleichen kann.

Um die Heizwirkung der Induktionsspule 15 im Ausgangskanal 12 des Ausgusses zu optimieren, ist in der Innenhülse 13 ein ringförmiger Einsatz 30 aus Graphit oder graphithaltigem Material im Bereich der Induktionsspule 15 vorgesehen. Der Einsatz 30 ist rückseitig und/oder auf beiden Stirnseiten vorteilhaft mit einer Isolationsschicht versehen.

Die Innenhülse 13 ist im Bereich des Einsatzes 30 mit einer Hartschicht 31, vorzugsweise aus Tonerde Al₂O₃ oder SiC versehen, mit welcher die Innenfläche des Einsatzes gegen die abfliessende Schmelze und/oder die Schlacke und/oder oxidierendes Gas, wie zum Beispiel Luft, geschützt ist. Die Hartschicht 31 kann gegebenenfalls über den ringförmigen Einsatz 30 hinaus verlängert sein. Zur Erleichterung des Einbaus ist die Innenhülse 13 in dem Gehäuse 9 und in dem Distanzring 24 zentriert und von aussen in den Lochstein 11 eingesetzt.

Fig. 3 verdeutlicht einen Kupfer-Anodenofen 1 mit einem an seinem Ausguss angebauten Schiebeverschluss 10, welcher eine Ofentrommel mit einem Stahlmantel 2 und einer Einfüllöffnung 4 umfasst. Die in dem Ofen durch eine spezielle Behandlung gereinigte Kupferschmelze wird anschliessend durch den Schiebeverschluss 10 abgegossen, der am Ausguss am Umfang der Ofentrommel montiert ist.

Bei dem Kupfer-Anodenofen 1 sind für den Betrieb der Induktionsheizung 14 im Ausguss vorzugsweise ein externer Generator 27 sowie ein mit diesem via Leitungen 25 verbundener Transformator 28 vorgesehen, wobei letzterer zum Beispiel am Ofen 1 angebracht ist. Zudem ist diese vom Transformator 28 zu der Induktionsspule 15 führende Stromleitung 26 sowie die Kühlleitung vorgesehen. Der Generator und der Transformator könnten auch als eine Baueinheit gebildet sein und am Ofen angebracht oder separat von diesem stationiert sein.

Zudem ist wie bereits vorgängig erläutert die jeweilige Spule 6', 11', 13' durch eine Leitung 34 mit einer externen Versorgungs- bzw. Auswerteeinheit 33 verbunden, durch welche diese Detektion nach der Erfindung ermittelt wird. Die Versorgungseinheit für die Spulen könnte auch in dem Generator 27 integriert sein.

Mittels eines Kühlsystems 16 mit einem Kühlaggregat 29 und Zu- und Rückleitungen 20, 21 werden zum einen Kühlmittel in die Induktionsspule 15 und die Kühlkammern 18, 19 der Induktionsheizung 14 und zum andern zu dem Generator 27 und dem Transformator 28 mit einer ausreichenden Kühlleistung gefördert.

Die Erfindung ist grundsätzlich auch bei allen metallurgischen Öfen anwendbar, deren Ausguss mit einem am Ausgussende angeordneten Schiebeverschluss versehen ist.

Die Induktionsheizung 14 wird entweder manuell oder automatisch im Zusammenwirken mit der Betätigungseinrichtung des Schiebeverschlusses aktiviert. Je nach Art oder Aufbau des Ofens kann sie auch mehrere über die Länge des Ausgusses verteilte Induktionsspulen beinhalten.

Wie aus Fig. 4 ersichtlich, ist die Induktionsspule 15 in einem Tragkörper 17 aus ferritischem Material eingebettet. Der Tragkörper 17 mit den ihn umgebenden Kühlkammern 18, 19 sind in der Tragplatte 23 eingebaut. Ferner ist die Induktionsheizung 14 an den Rück- und Seitenwänden vorteilhaft mit einer Isolationsschicht umhüllt. Zudem ist zwischen diesem Tragkörper 17 und dem Schiebeverschluss 10 ein Distanzring 24 vorzugsweise aus Kupfermaterial eingelegt. Dieser Distanzring 24 dient gleichsam als Zentrierung der Innenhülse 13 im Ausguss 5. Es könnten aber auch zwei separate Ringe vorgesehen sein. Zwischen der Tragplatte 23, der Halteplatte 2' und dem Gehäuse 9 ist auch eine längsverlaufende Leitung mit einer Nut oder dergleichen zur Aufnahme wenigstens einer Leitung 26, wie eine Strom- und Kühlmittelleitung, für die Induktionsspule 15 vorgesehen.

Das Gehäuse 9 ist an der Tragplatte 23 bzw. der Halteplatte 2' befestigt und kann zusammen und mit der Innenhülse 13 getrennt von der Induktionsheizung 14 mit dem Tragkörper 17, der Induktionsspule 15 und den Kühlkammern 18, 19 ein- und ausgebaut werden.

Anstelle eines Kupfer-Anodenofens könnten auch andere Gefässe mit dem Schiebeverschluss oder einer gleichsamen Schliessvorrichtung vorgesehen sein, wie zum Beispiel ein Kupfer-Konverter mit einem Abstich, der aus mehreren aneinandergereihten Hülsen ohne Lochstein gebildet ist, ein Flash Smelting Ofen, ein Elektro-Schmelzofen oder ähnliche metallurgische Gefässe.

Das erfindungsgemässe Verfahren zum Detektieren von den genannten Grössen eignet sich vorteilhaft auch für einen als Abstich vorgesehenen Ausguss eines Kupfer-Konverters. Die wenigstens eine Spule ist in einer der mehreren aneinandergereihten Hülsen (Abstichsteine) oder in einer diese umgebenden Zwischenhülse als Feuerfestteil eingebettet. Mit dem Ermitteln durch Impedanz können insbesondere der Verschleisszustand der Feuerfestteile, die erstarrte Metallschmelze und/oder Stopfmasse im Abstich bestimmt und damit kann auf einfache Weise sein Zustand festgestellt und gegebenenfalls sofort Massnahmen getroffen werden, zum einen, dass die Feuerfestteile erst im abgenutzten Zustand gewechselt werden und zum andern zu verhindern, dass im Konverter wegen zu stark abgenützten Feuerfestteilen ein Durchbruch riskiert wird.

Es kann im Rahmen der Erfindung auch anstelle eines Schiebeverschlusses ein anderes Verschlussorgan verwendet werden, wie zum Beispie! ein Stopfenverschluss, mittels dem auf bekannte Weise vom Gefässinnern oder von aussen ein Öffnen bzw. Schliessen des Ausgusses ausgeführt werden kann. Es kann auch eine Stopfmasse als Verschlussorgan zum Verschliessen des Ausgusses auf bekannte Weise von aussen verwendet werden, welche beispielsweise Aluminiumoxid enthält und verformbar ist.

Bei einem Ausguss ohne Verschlussorgan zum Beispiel bei einer Freilaufdüse bei einem Tundish könnte ebenfalls in einem Feuerfestteil eine Spule eingebettet sein und durch das Verfahren nach der Erfindung zumindest der Verschleisszustand der den Ausguss bildenden Feuerfestteile ermittelt werden.

## Patentansprüche

1. Verfahren zum Detektieren von Grössen in einem Ausguss eines metallurgischen Gefässes, bei dem mittels wenigstens einer den Ausgusskanal (12) umgebenden Spule und einer mit dieser durch Leitungen (34) verbundenen Versorgungs- bzw. Auswerteeinheit (33) gemessen und ausgewertet wird, wobei durch die Versorgungseinheit in der jeweiligen Spule ein Wechselstrom mit einer vorgegebenen Frequenz erzeugt und durch diese Auswerteeinheit Änderungen der Grössen ermittelt werden, **dadurch gekennzeichnet, dass**
durch diese Auswerteeinheit die Impedanz oder die Impedanz und der induzierte Stromverlauf durch Änderungen der Grössen ermittelt wird, wobei eine als den Ausgusskanal (12) umgebende Induktionsspule (15) einer Induktionsheizung (14) verwendet wird, mittels welcher als Monitoring die mindestens eine, vorzugsweise die verschiedenen Grössen im Ausguss (5) detektiert bzw. gemessen werden, wie der Schlackenanteil beim Abgiessen der Metallschmelze, der Verschleisszustand der Feuerfestteile im Ausgusskanal, erstarrte Metallschmelze und/oder Stopfmasse im Ausgusskanal, und dass nach dem Auswerten ein Betätigen eines Verschlussorgan für den Ausguss (5), ein Aufheizen des Metalls im Ausgusskanal und/oder eine Erneuerung des Ausgusskanals erfolgen kann.

2. Verfahren nach Anspruch 1, **dadurch gekennzeichnet, dass** Messzustände der Impedanz und/oder des induzierten Stromverlaufs vor, während und/oder nach dem Abgiessen in den verschiedenen Zuständen der Grössen, wie des Anteils der Schlacke in der Schmelze bzw. des Verschleisses im Ausguss (5) festgelegt bzw. ermittelt und als kalibrierende Sollwerte gespeichert werden, welche mit den gemessenen Istwerten vor, während und/oder nach dem Abgiessen verglichen und daraus die Grössen zugeordnet werden.

3. Verfahren nach Anspruch 1 oder 2, **dadurch gekennzeichnet, dass** die Änderungen der Impedanz ausgehend von der Versorgungseinheit in der Spule erzeugten Spannung, Strom und Frequenz ermittelt werden, wobei durch die Auswerteeinheit der komplexe Widerstand (Z), der komplexe Winkel (ϕ) und/oder der Strom (I) der Impedanz ermittelt werden.

4. Verfahren nach Anspruch 1 oder 2, **dadurch gekennzeichnet, dass** für das Monitoring der mindestens einen, vorzugsweise verschiedenen Grössen zusätzlich eine Temperaturmessung im Bereich des Ausgusskanals (12) und/oder bei der Induktionsheizung (14) erfolgt, welche von der Auswerteeinheit (33) zur Bestimmung der Grössen beigezogen bzw. mit Sollwerten verglichen und bei Abweichungen das Verschlussorgan für den Ausguss (5) betätigt wird, eine Aufheizung des Metalls im Ausgusskanal und/oder eine Erneuerung des Ausgusskanals erfolgt.

5. Einrichtung zur Durchführung des Verfahrens nach einem der vorhergehenden Ansprüche 1 bis 4, mit einer Schiebeverschluss-Einheit (10) am Ausguss eines metallurgischen Gefässes (1), mit einem Gehäuse (9), in welchem feuerfeste Verschlussplatten (6, 8) sowie wenigstens eine anschliessende feuerfeste Innenhülse (13) angeordnet sind, **dadurch gekennzeichnet, dass**
eine wegnehmbare Induktionsheizung (14) vorgesehen ist, welche wenigstens eine ausserhalb und/oder innerhalb des Gehäuses (9) zumindest teilweise die mindestens eine feuerfeste Innenhülse (13) umgebende Induktionsspule (15) aufweist, welche via Leitungen mit einer Versorgungs- bzw. Auswerteeinheit (33) verbunden ist, wobei mit dieser Induktionsspule (15) das Metall im Ausgusskanal aufgeheizt und als Monitoring durch die Auswerteeinheit (33) die Impedanz und/oder der induzierte Stromverlauf der mindestens einen, vorzugsweise verschiedenen Grössen im Ausguss (5) detektierbar bzw. messbar sind.

6. Einrichtung nach Anspruch 5, **dadurch gekennzeichnet, dass**
sich die Induktionsheizung (14) mit einer den Ausguss (5) umgebenden Induktionsspule (15) mit diese ummantelnde Kühlkammern (18, 19) versehen ist.

7. Einrichtung nach Anspruch 6, **dadurch gekennzeichnet, dass**
die Induktionsspule (15) in einem Tragkörper (17) aus ferritischem Material eingebettet ist und mit einer den Tragkörper (17) peripherisch umschliessenden Kühlkammer (18) und einer an der zum Ofen hin gerichteten Seitenwand des Tragkörpers angrenzenden Kühlkammer (19) versehen ist.

8. Einrichtung nach Anspruch 7, **dadurch gekennzeichnet, dass**
der Tragkörper (17) mit den ihn umgebenden Kühlkammern (18, 19) in einer beim Ausguss (5) befestigten Tragplatte (23) wegnehmbar eingebaut ist, wobei zwischen dieser und dem Schiebeverschluss (6) ein sich gegen den Tragkörper (17) abstützender Distanzring (24) eingelegt ist.

9. Einrichtung nach einem der vorhergehenden Ansprüche 5 bis 8,
**dadurch gekennzeichnet, dass**
die Induktionsspule (15) und die Kühlkammern (18, 19) der Induktionsheizung (14) mit einem Kühlmittel durch ein Kühlsystem (16) mit einem Kühlaggregat (29) in der Umgebung des Ofens gespeist werden.

10. Einrichtung nach Anspruch 9, **dadurch gekennzeichnet, dass**
mit dem Kühlsystem (16) der Induktionsspule eine Erstarrung der Schmelze und/oder Schlacke im Ausguss eines Ofens erzielbar ist.

11. Einrichtung nach einem der vorhergehenden Ansprüche 5 bis 10,
**dadurch gekennzeichnet, dass**
zusätzlich zur Versorgungs- und Auswerteeinheit (33) ein Generator (27) und ein Transformator (28) für die Stromversorgung der Induktionsspule (15) vorgesehen ist.

12. Einrichtung nach einem der vorhergehenden Ansprüche 5 bis 11,
**dadurch gekennzeichnet, dass**
die mit der Induktionsspule (15) am Ende des Abgiessens in den Ausguss gelangende Schlacke detektierbar und der Schiebeverschluss (10) automatisch schliessbar ist.

13. Einrichtung nach einem der vorhergehenden Ansprüche 5 bis 12,
**dadurch gekennzeichnet, dass**
wenigstens eine Spule (6', 11', 13') in einem den Ausgusskanal bildenden Feuerfestteil, wie in dem Lochstein (11), in der einen oder mehreren Innenhülsen (13), in einer Einsatzhülse (30), in einer Verschlussplatte (6) eines Schiebeverschlusses (10) oder dergleichen aufgenommen ist, welche die Durchlassöffnung umgibt und aus einer oder vorzugsweise mehreren Windungen gefertigt und mit einer Leitung versehen oder verbindbar ist, um einen Wechselstrom in der Spule zu erzeugen.

14. Einrichtung nach Anspruch 13, **dadurch gekennzeichnet, dass**
dass die Spule (6', 11', 13') koaxial zu der Durchlassöffnung ausgerichtet und vorzugsweise mit einer solchen Anzahl von Windungen ausgebildet ist, um ausreichende Messzustände mit derselben zu erzielen.

## Claims

1. Method for detecting variables in a spout of a metallurgical vessel, with which at least one coil surrounding the outlet channel (12) and a supply or evaluation unit (33) connected with this by leads (34) is measured and evaluated, wherein an alternating current with a predetermined frequency is produced by the supply unit in the respective coil and variations in the parameters are determined by this evaluation unit, **characterised in that**
the impedance or the impedance and the induced current flow are determined by this evaluation unit from variations in the parameters, wherein an induction coil (15) of an induction heater (14) as surrounding the outlet channel (12) is used, by means of which as monitoring the at least one, preferably the different variables in the spout (5) are detected respectively measured, such as the proportion of slag during pouring of the metal melt, the degree of wear of the refractory parts in the pouring channel, solidified metal melt and/or plugging material in the pouring channel, and that after the evaluation a closure member for the spout (5) is actuated, a heating of the metal in the pouring channel and/or a renewal of the pouring channel can take place.

2. Method according to claim 1, **characterised in that**
measurement states of the impedance and/or of the induced current flow, before, during and/or after the pouring in the various states of the variables, such as the proportion of slag in the melt or the wear in the spout (5) are established or determined and saved as calibrating reference values, which are compared with the actual measured values before, during and/or after the pouring and thereof the values are associated.

3. Method according to claim 1 or 2, **characterised in that**
the variations of the impedance are determined on the basis of the voltage, current and frequency produced in the coil by the supply unit, wherein the complex resistance (Z), the complex angle (ϕ) and/or the current (I) of the impedance are determined by the evaluation unit.

4. Method according to claim 1 or 2, **characterised in that**
for the monitoring of the at least one, preferably various variables, a temperature measurement is made in addition in the vicinity of the outlet channel (12) and/or the induction heater (14), which is referred to or compared with target values by the evaluation unit (33) for determination of the variables and, where there are deviations, the closure member for the spout (5) is actuated, the metal in the pouring channel is heated and/or the pouring channel is renewed.

5. Device for the execution of the method according to any of the preceding claims 1 to 4, with a slide closure unit (10) on the spout of a metallurgical vessel (1), comprising a housing (9), in which refractory closure plates (6, 8) as well as at least one connecting refractory inner nozzle (13) are arranged, **characterised in that**
a removable induction heater (14) is provided, having at least one induction coil (15) at least partially surrounding the at least one refractory inner nozzle (13) outside of or within the housing (9), which is connected via leads to a supply or evaluation unit (33), wherein the metal in the outlet channel is heated with this induction coil (15) and as monitoring the impedance and/or the induced current flow can be detected or measured of the at least one, preferably various variables in the spout (5) by the evaluation unit (33).

6. Device according to claim 5, **characterised in that**
the induction heater (14) is provided with an induction coil (15) that surrounds the spout (5) with these encasing cooling chambers (18, 19).

7. Device according to claim 6, **characterised in that**
the induction coil (15) is embedded in a supporting body (17) made of ferritic material and is provided with a cooling chamber (18) that encloses the supporting body (17) peripherally and with a cooling chamber (19) adjacent to the side wall of the supporting body directed towards the furnace.

8. Device according to claim 7, **characterised in that**
the supporting body (17), along with the cooling chambers (18, 19) surrounding it, is fitted removably in a support plate (23) fastened to the spout (5), wherein a spacer ring (24) supported against the supporting body (17) being inserted between said support plate and the slide closure (6).

9. Device according to any of the preceding claims 5 to 8,
**characterised in that**
the induction coil (15) and the cooling chambers (18, 19) of the induction heater (14) are fed with a cooling means by a cooling system (16) that has a cooling unit (29) in the vicinity of the furnace.

10. Device according to claim 9, **characterised in that**
a solidification of the melt and/or slag in the spout of a furnace can be achieved with the cooling system (16) of the induction coil.

11. Device according to any of the preceding claims 5 to 10,
**characterised in that**
in addition to the supply and evaluation unit (33) a generator (27) and a transformer (28) are provided for supplying the power to the induction coil (15).

12. Device according to any of the preceding claims 5 to 11,
**characterised in that**
the slag reaching the spout at the end of the pouring can be detected with the induction coil (15) and the slide closure (10) can be closed automatically.

13. Device according to any of the preceding claims 5 to 12,
**characterised in that**
at least one coil (6', 11', 13') is housed in the refractory member, which forms the outlet opening, as in the perforated brick (11), in the one or multiple inner nozzles (13), in an insert nozzle (30), in a closure plate (6) of a slide closure (10) or such, which surrounds the outlet opening and is made from one or preferably multiple windings and provided with or can be connected with a lead, to produce an alternating current in the coil.

14. Device according to claim 13, **characterised in that**
the coil (6', 11', 13') is aligned coaxial to the outlet opening and is preferably constructed with such a number of windings to produce adequate measuring conditions with the same.

## Revendications

1. Procédé de détection de grandeurs dans une busette de coulée d'un récipient métallurgique, dans lequel on effectue mesure et exploitation au moyen d'au moins une bobine entourant le conduit (12) de la busette et d'une unité (33) d'alimentation et d'exploitation reliée à celle-ci par des lignes (34), dans lequel on produit, par l'unité d'alimentation dans la bobine respective, un courant alternatif d'une fréquence donnée à l'avance et on détermine par cette unité d'exploitation des variations des grandeurs, **caractérisé en ce que**
on détermine par cette unité d'exploitation l'impédance ou l'impédance et la courbe de courant induite par des variations des grandeurs, dans lequel on utilise, comme bobine (15) d'induction entourant le conduit (12) de la busette, un chauffage (14) par induction, au moyen duquel on détecte ou on mesure dans la busette (5) comme monitoring la au moins une, de préférence les diverses, grandeur, comme la proportion de scories à la coulée du métal fondu, l'état d'usure des parties réfractaires du conduit de la busette, du métal fondu solidifié et/ou une masse formant bouchon dans le conduit de la busette, et **en ce que**, après l'exploitation, l'actionnement d'un organe de fermeture de la busette (5), le chauffage du métal dans le conduit de la busette et/ou un remplacement du conduit de la busette peut avoir lieu.

2. Procédé suivant la revendication 1, **caractérisé en ce que** on fixe ou on détermine des états de mesure de l'impédance et/ou de la courbe de courant induite avant, pendant et/ou après la coulée dans les divers états des grandeurs comme la proportion des scories dans la masse fondue ou l'usure dans la busette (5) et on les mémorise comme valeurs de consigne étalonnées, qui sont comparées aux valeurs réelles mesurées avant, pendant et/ou après la coulée et les grandeurs y sont associées.

3. Procédé suivant la revendication 1 ou 2, **caractérisé en ce que**
on détermine les variations de l'impédance à partir de l'unité d'alimentation dans la tension, le courant et la fréquence produits dans la bobine, la résistance (Z) complexe, l'angle (ϕ) complexe et/ou le courant (I) de l'impédance étant déterminés par l'unité d'exploitation.

4. Procédé suivant la revendication 1 ou 2, **caractérisé en ce que**
pour le monitoring de la au moins une, de préférence de diverses grandeurs, on effectue, en outre, une mesure de la température dans la région du conduit (12) de la busette et/ou au chauffage (14) par induction, qui est mise à profit par l'unité (33) d'exploitation pour la détermination des grandeurs ou qui est comparée à des valeurs de consigne, et s'il y a des écarts, on actionne l'organe de fermeture de la busette (5), on effectue un chauffage du métal dans le conduit de la busette et/ou on remplace le conduit de la busette.

5. Dispositif pour effectuer le procédé suivant l'une des revendications 1 à 4, comprenant une unité (10) de fermeture à tiroir à la busette d'un récipient (1) métallurgique, comprenant un boîtier (9), dans lequel sont disposées des plaques (6, 8) de fermeture réfractaires, ainsi qu'au moins un manchon (13) intérieur réfractaire s'y raccordant, **caractérisé en ce que**
il est prévu un chauffage (14) par induction pouvant être enlevé, qui a au moins une bobine (15) d'induction à l'extérieur et/ou à l'intérieur du boîtier (9), entourant au moins en partie, le au moins un manchon (13) intérieur réfractaire, bobine qui, par l'intermédiaire de lignes, est reliée à une unité (33) d'alimentation ou d'exploitation, dans lequel, par cette bobine (15) d'induction, le métal dans le conduit de la busette est chauffé et, en monitoring par l'unité (33) d'exploitation, l'impédance et/ou la courbe de courant induite de la au moins une, de préférence de diverses grandeurs dans la busette (5) peuvent être détectées ou mesurées.

6. Dispositif suivant la revendication 5, **caractérisé en ce que**
le chauffage (14) par induction est pourvu d'une bobine (15) d'induction entourant la busette (5) et ayant des chambres (18, 19) de refroidissement enveloppées avec celle-ci.

7. Dispositif suivant la revendication 6, **caractérisé en ce que**
la bobine (15) d'induction est incorporée dans une pièce (17) porteuse en matériau ferritique et est pourvue d'une chambre (18) de refroidissement, entourant périphériquement la pièce (17) porteuse, et d'une chambre (19) de refroidissement délimitant la paroi latérale, tournée vers le four, de la pièce porteuse.

8. Dispositif suivant la revendication 7, **caractérisé en ce que**
la pièce (17) porteuse, avec les chambres (18, 19) de refroidissement qui l'entourent, est incorporée dans une plateau (23) porteur fixé à la busette (5) avec possibilité d'être enlevée, dans lequel, entre ce plateau et la fermeture (6) à tiroir, est inséré un anneau (24) d'entretoisement s'appuyant sur la pièce (17) porteuse.

9. Dispositif suivant l'une des revendications 5 à 8 précédentes, **caractérisé en ce que**
la bobine (15) d'induction et les chambres (18, 19) de refroidissement du chauffage (14) par induction sont alimentées en un fluide de refroidissement par un système (16) de refroidissement, ayant un groupe (29) de refroidissement au voisinage du four.

10. Dispositif suivant la revendication 9, **caractérisé en ce que**
par le système (16) de refroidissement de la bobine d'induction, une solidification de la masse fondue et/ou des scories dans la busette d'un four peut être obtenue.

11. Dispositif suivant l'une des revendications 5 à 10 précédentes, **caractérisé en ce que**
il est prévu en plus de l'unité (33) d'alimentation et d'exploitation une génératrice (27) et un transformateur (28) d'alimentation en courant de la bobine (15) d'induction.

12. Dispositif suivant l'une des revendications 5 à 11 précédentes, **caractérisé en ce que**
les scories parvenant dans la busette à la fin de la coulée peuvent être détectées par la bobine (15) d'induction et la fermeture (10) à tiroir peut être fermée automatiquement.

13. Dispositif suivant l'une des revendications 5 à 12 précédentes, **caractérisé en ce que**
au moins une bobine (6', 11', 13') est logée dans une partie réfractaire formant le conduit de la busette comme dans la brique (11) perforée, dans le un ou les plusieurs manchons (13) intérieurs, dans un manchon (30) d'insertion, dans une plaque (6) de fermeture d'une fermeture (10) à tiroir ou analogues, qui entoure l'ouverture de passage et est fabriquée en un ou de préférence en plusieurs enroulements et est pourvue d'une ligne ou peut être reliée à une ligne afin de produire un courant alternatif dans la bobine.

14. Dispositif suivant la revendication 13, **caractérisé en ce que**
la bobine (6', 11', 13') est dirigée coaxialement à l'ouverture de passage et est constituée, de préférence, en ayant un nombre d'enroulements tel qu'il permet d'en obtenir des états de mesure suffisants.
